# FASCICULE DE BREVET EUROPEEN

(11) **EP 2 166 609 B1**
(45) Date de publication et mention de la délivrance du brevet: **13.07.2011**
(21) Numéro de dépôt: 09354032.6
(22) Date de dépôt: 23.07.2009
(51) Int. Cl.: H01M 10/04, H01M 10/052, H01M 10/0585, H01M 6/40, H01M 2/02, H01M 4/38, H01M 4/485, H01M 4/58, H01M 10/0562

(54) **Micro-batterie au lithium comportant une couche d'encapsulation et procédé de fabrication**
Lithium-Mikrobatterie umfassend eine Hüllschicht und Verfahren zur Herstellung derselben
Lithium micro-battery comprising an encapsulating layer and method of manufacturing the same

(30) Priorité: 16.09.2008 FR 0805074
(43) Date de publication de la demande: 24.03.2010
(73) Titulaire: Commissariat à l'Énergie Atomique et aux Énergies Alternatives, 75015 Paris (FR)
(72) Inventeur: Bedjaoui, Messaoud, 38130 Echirolles (FR); Martin, Steve, 38160 Saint-Sauveur (FR)
(74) Mandataire: Hecké, Gérard

(56) Documents cités:
- EP-A- 1 488 917
- WO-A-01/73875
- WO-A-02/47187
- WO-A-2008/011061
- FR-A- 2 861 218
- FR-A- 2 862 436
- US-B1- 6 994 933

## Description

### Domaine technique de l'invention

L'invention concerne une micro-batterie au lithium comportant une couche d'encapsulation formée d'une couche de protection en matériau polymère, surmontée d'une couche barrière.

L'invention concerne également un procédé de fabrication d'une telle micro-batterie.

### État de la technique

Les micro-batteries, également appelées batteries "tout solide", trouvent de nombreuses applications industrielles notamment dans le domaine de la microélectronique où la miniaturisation des composants et les besoins en autonomie imposent l'utilisation d'accumulateurs plus petits, plus puissants et ayant des durées de vie plus longues. Les micro-batteries se présentent sous la forme d'un empilement de couches minces solides, déposées successivement sur un substrat par des techniques conventionnelles de l'industrie de la microélectronique notamment par dépôt physique en phase vapeur ("physical vapor deposition", PVD), dépôt chimique en phase vapeur ("chemical vapor deposition", CVD) et des techniques de lithographie.

Les micro-batteries au lithium sont particulièrement intéressantes du fait de leur forte densité massique, leur surface de stockage utile d'énergie élevée et leur faible toxicité. Néanmoins, ces micro-batteries au lithium sont très sensibles à l'air et en particulier à l'humidité. En présence d'eau ou d'oxygène, l'électrode négative au lithium s'oxyde pour donner respectivement de l'hydroxyde de lithium (LiOH) ou de l'oxyde de lithium (Li₂O). Ce phénomène entraîne, à terme, une perte des performances de la micro-batterie. Pour remédier à cet inconvénient, la micro-batterie est généralement recouverte d'un revêtement imperméable, compatible avec les composants de la micro-batterie, qui encapsule la micro-batterie au lithium et constitue ainsi une barrière vis-à-vis des contaminants. Les couches barrière couramment utilisées sont les couches polymère, céramique ou métallique.

D'autres inconvénients limitent également l'utilisation de ces micro-batteries en microélectronique ou affectent leurs performances. L'instabilité thermique du lithium à haute température est un point particulièrement limitant pour l'intégration des micro-batteries au lithium dans des dispositifs microélectroniques.

Enfin, le fonctionnement de micro-batterie au lithium étant basé sur le transport du courant par les ions lithium, lors de la charge et de la décharge de la micro-batterie, les électrodes subissent des déformations dues à l'insertion et l'extraction, également appelé désinsertion, des ions lithium dans les électrodes. Ces modifications répétées de volume entraînent rapidement des dommages mécaniques, notamment des pertes de contact entre l'électrode négative et le collecteur de courant correspondant.

De récents travaux ont proposé de nouvelles configurations de micro-batteries afin de pallier à ces inconvénients. À titre d'exemple, le document US-A-2007048604 décrit une microbatterie comportant une enveloppe de protection ayant au moins deux couches, une première couche et une seconde couche superposées et distinctes. La première couche comporte un matériau inerte par rapport au lithium métallique constituant l'anode. Le matériau de la première couche est choisi parmi un carbure de silicium amorphe hydrogéné, un oxycarbure de silicium amorphe hydrogéné, du carbone amorphe hydrogéné, du carbone amorphe fluoré et du silicium amorphe hydrogène. Le matériau de la seconde couche est choisi parmi un carbonitrure de silicium amorphe hydrogéné, un nitrure de silicium amorphe hydrogéné et du carbone amorphe fluoré.

Le document US-A-2007091543 décrit une couche de protection pour microbatterie constituée d'un métal ou d'un alliage métallique. Cette couche de protection peut être, éventuellement, associée à une couche isolante.

Le document US-A-2005141170 divulgue une structure multicouche de forme trapézoïdale recouverte, sur ses parties latérales, d'une couche de protection formée d'un film métallique, d'oxyde métallique, de nitrure métallique, de composite ou de résines telles que les résines époxy ou les résines acrylate.

Le document US-A-2002071989 propose une couche de protection constituée, successivement, de deux couches diélectriques, par exemple d'oxyde d'aluminium et de dioxyde de silicium, et d'une couche d'étanchéité recouvrant les couches diélectriques.

Le document US-B-6387563 décrit une couche de protection pour batterie comportant une couche époxy 41 sous une couche en céramique 40.

La demande de brevet US-A-2008044732 décrit une micro-batterie encapsulée de façon conventionnelle par une ou plusieurs couches barrière en polymère, en céramique ou en métal, qui présente la particularité de comporter une électrode nanostructurée. L'électrode est formée de nanotubes ou de nanofils, de préférence, à base de germanium, silicium, argent, étain ou carbone, espacés entre eux de façon à former des cavités à l'intérieur de l'électrode. L'architecture de cette électrode permet de compenser les variations de volume de l'électrode lors de la charge et la décharge de la micro-batterie et diminue ainsi les contraintes mécaniques. Cependant, cette structure n'est pas adaptée à une électrode négative à base de lithium métallique.

La demande de brevet internationale W02008/011061 divulgue une micro-batterie comportant une couche d'encapsulation multicouche. La couche d'encapsulation comprend une alternance d'au moins une couche de polymère organique, tels que les époxy, polyimide ou le silicone, et une couche métallique. La couche de polymère organique atténue les défauts de surface ainsi que les aspérités et fournit un support plan pour le dépôt de la couche métallique. Dans cette couche d'encapsulation, la couche métallique évite la migration des contaminants à l'intérieur de la micro-batterie. Toutefois, les polymères organiques suggérés ne sont pas compatibles avec les micro-batteries au lithium. En effet, les polyimides contiennent des solvants favorisant l'émission de vapeur d'eau et sont donc incompatibles avec le lithium métallique. D'autre part, bien que les résines époxy soient thermiquement très stables, elles présentent une rigidité qui ne leur permette pas d'absorber les contraintes mécaniques présentes lors du fonctionnement de la micro-batterie. En outre, de telles résines sont connues pour ne pas être totalement inertes vis-à-vis des ions lithium. Une certaine quantité d'ions Li⁺ peut s'insérer dans la résine époxy, limitant alors la capacité des ions lithium à migrer vers l'électrode positive. Enfin, les résines silicone sont connues pour être peu compatibles avec les couches métalliques, couramment utilisées en microélectronique. Or, l'incompatibilité entre différentes couches constituant l'encapsulation peut provoquer des décollements aux interfaces et affecter l'intégrité de la micro-batterie.

Le brevet US6994933 propose d'encapsuler une micro-batterie au lithium par un composite formé par une première couche de polymère de type acrylate ou polyoléfine et une ou plusieurs couches barrière. La première couche de polymère recouvre l'empilement des couches minces de la micro-batterie et permet de former une surface peu rugueuse et dépourvue de trou, sur laquelle sont déposées les couches barrière successives, dont l'épaisseur est alors plus homogène. La ou les couches barrière(s) sont choisies parmi les couches céramique, métallique ou polymère. Cette homogénéité améliore leur propriété de barrière aux contaminants. Néanmoins, les polymères acrylate et polyoléfine ont des tenues en température inférieure à 230°C. Or, pour intégrer une micro-batterie dans un dispositif microélectronique, cette micro-batterie est généralement connectée électriquement, par soudure des collecteurs de courant, selon un procédé de soudure à vague ( "solder reflow" en anglais). Ce procédé est mis en oeuvre à une température de 260°C durant 10 min. L'instabilité thermique des polymères acrylate et polyoléfine rend donc difficile l'utilisation d'une telle micro-batterie en microélectronique.

### Objet de l'invention

L'invention a pour but de proposer une micro-batterie remédiant aux inconvénients de l'art antérieur et son procédé de fabrication.

En particulier, En particulier, l'invention a pour but une micro-batterie comportant une couche d'encapsulation jouant le rôle de barrière étanche à l'air, inerte vis-à-vis des composants de la micro-batterie et compatible avec les procédés industriels de la microélectronique, notamment avec le procédé de soudure à vague.

L'invention a également pour but une micro-batterie au lithium, dotée d'une bonne tenue, mécanique et thermique, et obtenue selon un procédé de fabrication industrialisable.

Selon l'invention, ce but est atteint par une micro-batterie au lithium et un procédé de fabrication d'une telle micro-batterie selon les revendications annexées.

### Description sommaire des dessins

D'autres avantages et caractéristiques ressortiront plus clairement de la description qui va suivre des modes particuliers de réalisation de l'invention donnés à titre d'exemples non limitatifs et représentés aux dessins annexés, dans lesquels :
- La figure 1 représente, schématiquement et en coupe, un mode particulier de réalisation d'une micro-batterie au lithium selon l'invention.
- La figure 2 représente, la température de dégradation en fonction du pourcentage massique du précurseur époxyde OG142-13, d'un copolymère acrylate/époxyde obtenu à partir des précurseurs, diacrylate 1,6-hexanediol (HDODA)/diglycidyléther du bisphénol A (OG142-13).
- La figure 3 représente, une vue en coupe partielle et agrandie, d'une variante de la micro-batterie selon la figure 1.
- Les figures 4 à 6 représentent, schématiquement et en coupe, différentes étapes d'un premier procédé de fabrication d'une micro-batterie selon la figure 1. ,
- Les figures 7 à 9 représentent, schématiquement et en coupe, différentes étapes d'un second procédé de fabrication de la micro-batterie de la figure 1.

### Description des modes de réalisation particuliers de l'invention

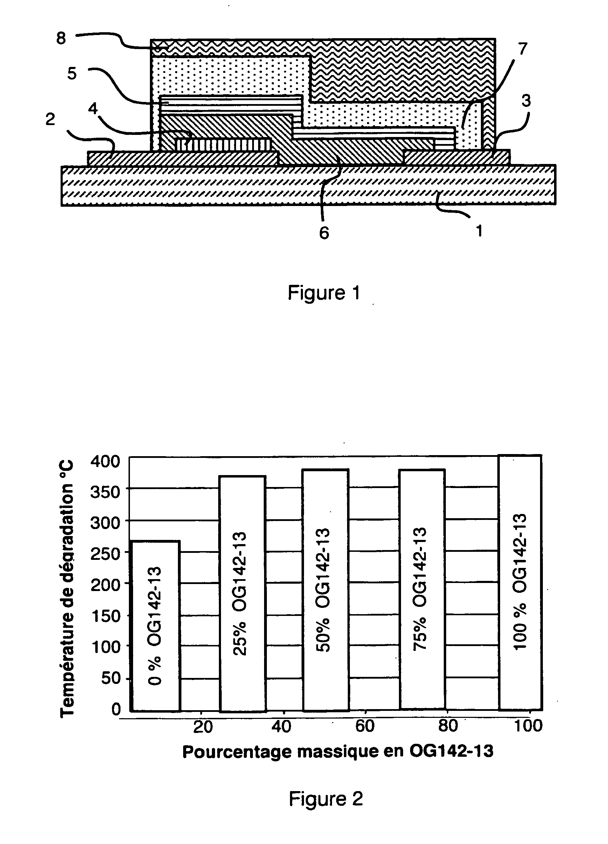

Selon un mode de réalisation particulier représenté à la figure 1, la micro-batterie est constituée d'un empilement de couches successives sur un substrat 1, de préférence en silicium, pouvant contenir un circuit intégré (non représenté). Deux collecteurs de courant 2 et 3, métalliques de 200nm d'épaisseur, par exemple en platine, tungstène, titane ou or, sont formés sur le substrat 1. Une électrode positive 4 est située sur le premier collecteur 2 et recouverte par un électrolyte solide 6, qui sépare l'électrode positive 4 d'une électrode négative 5. L'électrode positive 4 est constituée d'un matériau ayant une bonne conductivité électronique et ionique, par exemple, d'oxysulfure de titane (TiOS), de pentoxyde de vanadium (V₂O₅) ou de disulfure de titane (TiS₂). L'électrode négative 5 est, de préférence, du lithium métallique ayant une épaisseur d'environ 3,5 µm. L'électrolyte 6 est un isolant ayant une forte conductivité ionique tel que l'oxynitrure de lithium et de phosphore (LiPON). Comme représenté à la figure 1, cet électrolyte 6 recouvre entièrement l'électrode positive 4, une partie du substrat 1 située entre les deux collecteurs 2 et 3, et une partie des premier et second collecteurs 2 et 3. Par ailleurs, l'électrode négative 5 recouvre entièrement la surface de la couche d'électrolyte solide 6 et une partie du second collecteur 3. Une couche d'encapsulation, formée d'une couche de protection 7 en matériau polymère surmontée d'une couche barrière 8, encapsule les électrodes 4 et 5 ainsi que l'électrolyte solide 6 et couvre, en partie, les premier et second collecteurs 2 et 3.

La couche de protection 7 en contact avec l'électrode négative 5 est un copolymère acrylate/époxyde, d'une épaisseur comprise, de préférence, entre 2 et 5 µm. Cette couche de protection 7 est parfaitement compatible avec les autres couches de la micro-batterie et présente une bonne flexibilité ainsi qu'une résistance aux températures élevées c'est-à-dire supérieures ou égales à 360°C. Le copolymère est formé à partir d'un mélange homogène d'au moins deux matériaux précurseurs photopolymérisables, respectivement à base d'acrylate et à base d'époxyde. L'acrylate est, avantageusement, un diacrylate aliphatique, de préférence, le diacrylate 1,6-hexanediol (HDODA). L'époxyde est, avantageusement, un polyépoxyde aromatique, de préférence, le diglycidyléther du bisphénol A (DGEBA), vendu par la société Epoxy Technology sous le nom commercial "Epo-Tek OG142-13". Afin d'obtenir un mélange HDODA / OG142-13 homogène, la quantité de HDODA est comprise, avantageusement, entre 25% et 75% en poids par rapport au poids total du mélange, de préférence, égale à 25%. Comme illustré à la figure 2, le copolymère HDODA / OG142-13 a une température de dégradation supérieure ou égale à 360°C à partir de 25 % en poids d'OG142-13 par rapport au poids total du copolymère. La température de dégradation est mesurée à partir d'analyse thermo-gravimétrique (ATG) d'un film mince du copolymère HDODA /OG142-13. Les propriétés du copolymère ainsi obtenu permettent de compenser le gonflement de l'empilement constitué par les électrodes 4, 5 et l'électrolyte solide 6, tout en supportant des températures voisines de 360°C.

La couche barrière 8 est, de préférence, métallique, par exemple, en titane, tungstène, aluminium ou platine. Elle recouvre la totalité de la surface de la couche de protection 7 afin de rendre la micro-batterie hermétique à l'air et à l'eau.

Aucune dégradation n'est observée lors du fonctionnement de la micro-batterie du fait de la flexibilité de la couche de protection 7.

Par ailleurs, la couche d'encapsulation comportant une telle couche de protection 7 assure, vis-à-vis de l'air, une meilleure protection de la micro-batterie au lithium que dans le cas d'une couche de protection entièrement réalisée à partir d'un précurseur HDODA ou d'un précurseur OG142-13. En effet, le niveau de barrière à la vapeur d'eau pour une couche d'encapsulation comportant une couche de protection 7, atteint une valeur de 8×10⁻⁴ g/m²/jour de vapeur d'eau, pour une proportion de HDODA comprise entre 25 et 75 % en poids/poids total alors que pour le polyacrylate (100% HDODA) la valeur est égale à 5x10⁻³ g/m²/jour, et pour le polyépoxyde (100% OG142-13) de 10⁻³ g/m²/jour. L'association des deux précurseurs, HDODA et OG142-13, induit donc un effet de synergie.

Dans une variante non représentée, la couche barrière 8 est constituée par un empilement de couches métallique, céramique ou polymère.

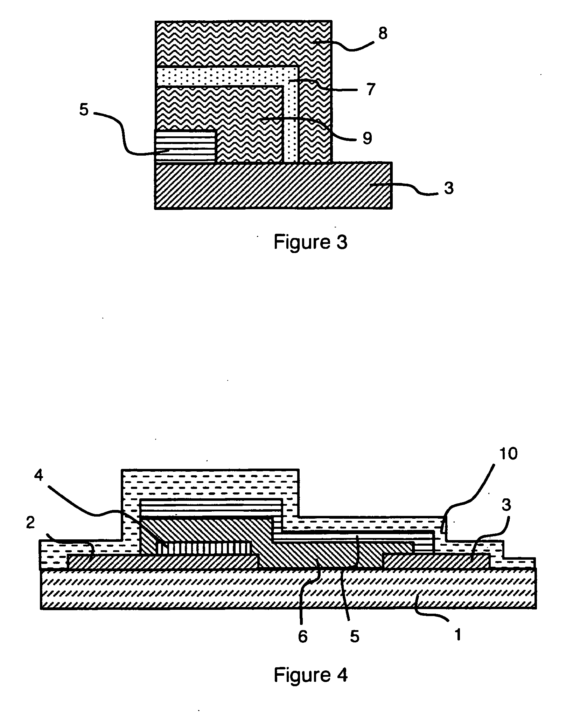

Selon une variante représentée à la figure 3, une couche métallique 9 recouvre l'électrode négative 5 de façon à s'intercaler entre l'électrode négative 5 et la couche de protection 7 et à venir en contact avec le second collecteur de courant 3. La couche métallique 9, par exemple en titane, a avantageusement une épaisseur de 200 nm et est inerte vis-à-vis de l'électrode négative 5. Elle protège temporairement l'électrode négative 5 et améliore également le contact électrique entre cette électrode 5 et le second collecteur de courant 3.

Selon un procédé de fabrication particulier, un empilement de couches minces est réalisé sur le substrat 1, par dépôt PVD ou CVD et structuration successifs des couches selon tout procédé connu, avantageusement, par photolithographie. Cet empilement comporte une couche mince de 200 nm d'épaisseur, structurée pour former sur le substrat, les premier et second collecteurs de courant 2 et 3, espacés l'un de l'autre. Il comporte ensuite une couche mince de 1,5 µm d'épaisseur formant l'électrode positive 4 et une couche mince formant l'électrolyte solide 6. L'électrode positive 4 est formée uniquement sur le premier collecteur de courant 2 et recouverte par la couche mince d'électrolyte 6.

L'électrode négative 5 est ensuite déposée, avantageusement, par évaporation à travers un masque mécanique, pour former une couche mince homogène de 3,5 µm d'épaisseur, afin de couvrir la totalité de l'électrolyte 6. Un mélange homogène 10, liquide, des deux précurseurs de la couche de protection 7 est réalisé en mélangeant 2,5g de HDODA et 7,5g de OG142-13 durant 5 min, à une vitesse d'agitation comprise entre 1 000 et 1 500 tours/min et à température ambiante. La solution homogène obtenue a une viscosité dynamique comprise entre 0,1 et 0,4 Pa.s, de préférence égale à 0,25 Pa.s.

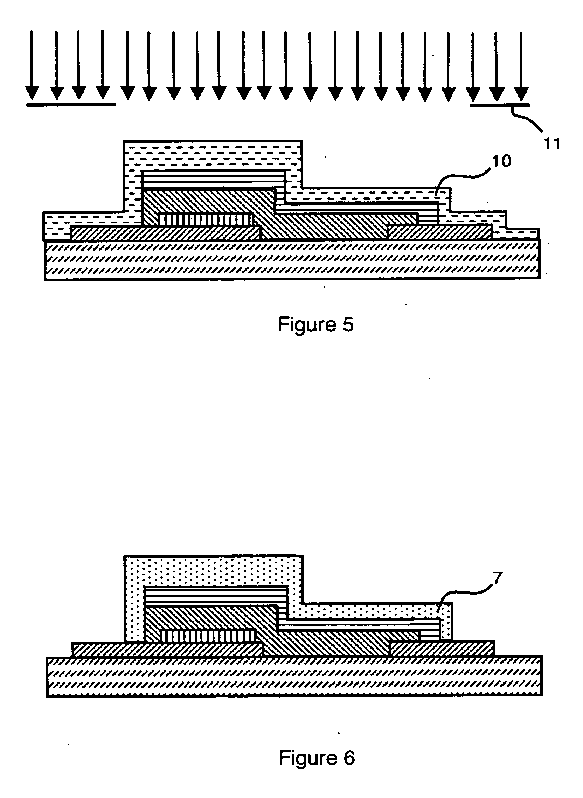

Comme représenté à la figure 4, le mélange homogène 10 ainsi obtenu, est avantageusement étalé sous forme d'une couche mince sur la totalité de la surface de l'empilement décrit précédemment, par exemple, par dépôt à la tournette ("spin coating" en anglais) ou par sérigraphie. Puis, la couche de mélange homogène est photopolymérisée. L'épaisseur de la couche de protection 7, comprise entre 2 et 5 µm, est contrôlée en ajustant la vitesse de dépôt. Comme représenté à la figure 5, la couche de mélange homogène 10 est photopolymérisée par irradiation par un rayonnement UV ou par un faisceau d'électrons ("e-beam" en anglais). Cette photopolymérisation est effectuée à travers un motif 11 afin de ne pas polymériser une zone de la couche de mélange homogène 10 recouvrant une partie des premier et second collecteurs de courant 2 et 3. La photopolymérisation est donc localisée sur une partie de la couche de mélange homogène 10 recouvrant l'électrode positive 4, l'électrolyte 6, l'électrode négative 5 et une partie seulement des deux collecteurs 2 et 3. Pour obtenir une couche de protection 7 ayant une épaisseur de 4 µm, à partir d'un mélange 75 % HDODA / 25 % OG 142-13, le mélange homogène 10 est, par exemple, déposé à la tournette sur un substrat de silicium de 150 mm de diamètre, à une vitesse de 4000 tours/min puis soumis à une exposition UV durant 1 minute. La couche de protection 7 obtenue possède alors une homogénéité supérieure à 95 %. La partie de la couche de mélange homogène 10 non photopolymérisé est ensuite éliminée (figure 6).

Une couche barrière de 200 nm d'épaisseur est alors déposée, par tout procédé connu, sur la totalité de la couche de protection 7 et, de préférence, sur une partie seulement du second collecteur de courant 3, permettant ainsi l'accès aux collecteurs de courant 2 et 3 pour une connexion ultérieure, tout en encapsulant les parties de la micro-batterie sensibles à l'air.

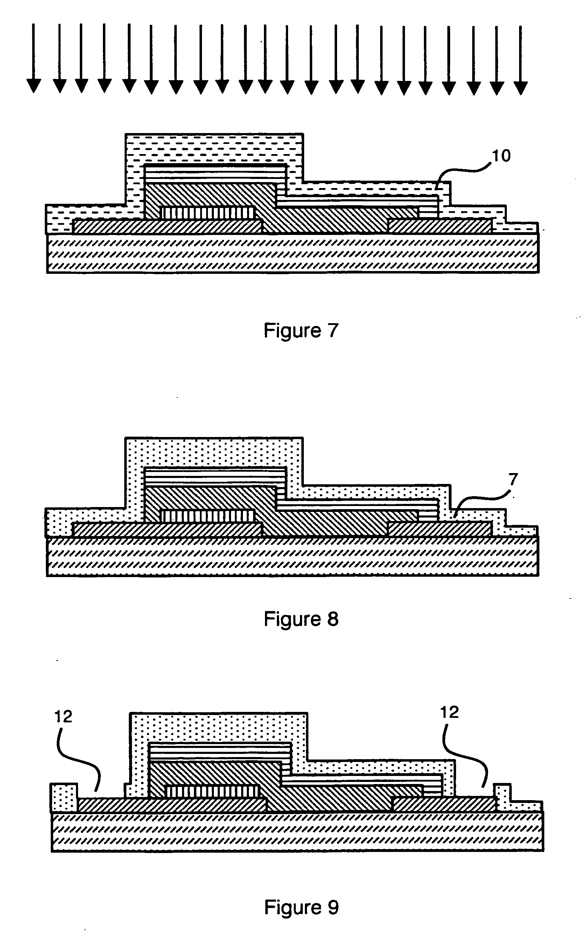

Selon une variante, avant formation de la couche barrière (8), la totalité de la couche de solution de mélange homogène 10 est soumise à une irradiation, comme représenté à la figure 7, pour obtenir une couche de protection 7 sur la totalité de l'empilement décrit précédemment (figure 8). Une ou plusieurs ouvertures 12 sont ensuite réalisées dans la couche de protection 7, par gravure sèche sélective, par exemple, avec un plasma d'oxygène O₂, pour libérer une partie de la surface des premier et second collecteurs 2 et 3.

La réalisation de la couche de protection 7 met en oeuvre des techniques conventionnelles de dépôt à la tournette, sérigraphie et/ou photolithographie, qui s'intègrent avantageusement dans un procédé de fabrication de micro-batterie. Par ailleurs, la photopolymérisation réalisée à température ambiante est adaptée au lithium, thermiquement instable. Contrairement aux procédés de l'art antérieur, les risques de contamination de la micro-batterie lithium sont réduits car, dans la chaîne de fabrication, la couche de protection 7 est réalisée sur le même poste que celui utilisé pour les autres couches et ne nécessite, par conséquent, pas d'opération risquée de transfert sur un autre poste. De plus, la micro-batterie comportant la couche de protection 7 décrite ci-dessus présente une tenue en température permettant la connexion ultérieure des collecteurs de courant 2 et 3 par soudure à vague et une durée de vie améliorée.

## Revendications

1. Micro-batterie au lithium comportant une couche d'encapsulation formée successivement d'une couche de protection (7) en matériau polymère, surmontée d'une couche barrière (8), **caractérisé en ce que** ladite couche de protection (7) comporte un copolymère formé à partir d'un mélange homogène (10) d'au moins deux matériaux précurseurs photopolymérisables, respectivement à base d'acrylate et à base d'époxyde.

2. Micro-batterie au lithium selon la revendication 1, **caractérisé en ce que** l'acrylate est un diacrylate aliphatique et/ou l'époxyde un polyépoxyde aromatique.

3. Micro-batterie au lithium selon la revendication 2, **caractérisé en ce que** le diacrylate est le diacrylate 1,6-hexanediol (HDODA) et le polyépoxyde aromatique est le diglycidyléther du bisphénol A (DGEBA).

4. Micro-batterie au lithium selon la revendication 3, **caractérisé en ce que** le mélange homogène contient entre 25 % et 75% en poids de diacrylate 1,6-hexanediol par rapport au poids total du mélange.

5. Micro-batterie au lithium selon l'une quelconque des revendications 1 à 4, **caractérisé en ce que** le mélange est liquide et a une viscosité dynamique comprise entre 0,1 Pa.s et 0,4 Pa.s.

6. Micro-batterie au lithium selon l'une quelconque des revendications 1 à 5, **caractérisé en ce que** la couche barrière (8) est une couche métallique.

7. Procédé de fabrication d'une micro-batterie au lithium selon l'une quelconque des revendications 1 à 6 **caractérisé en ce qu'**il comporte les étapes successives suivantes:
- réalisation sur un support d'un empilement constitué par un premier et un second collecteur de courant (2, 3), une électrode positive (4), un électrolyte solide (6), et une électrode négative (5),
- dépôt d'une couche mince du mélange homogène (10) sur la totalité de la surface de l'empilement,
- photopolymérisation d'au moins une partie de la couche de mélange homogène (10) et,
- formation de la couche barrière (8).

8. Procédé de fabrication selon la revendication 7 **caractérisé en ce que** la photopolymérisation est localisée sur une partie de la couche de mélange homogène (10) recouvrant l'électrode positive (4), l'électrolyte (6), l'électrode négative (5) et une partie seulement des deux collecteurs (2, 3), le procédé comportant ensuite l'élimination de la partie de la couche de mélange homogène (10) non photopolymérisé avant formation de la couche barrière (8).

9. Procédé de fabrication selon la revendication 7 **caractérisé en ce que** la photopolymérisation est réalisée sur la totalité de la couche de mélange homogène (10) et est suivie d'une gravure sèche sélective, de préférence, au plasma O₂, avant formation de la couche barrière (8).

## Claims

1. A lithium microbattery comprising an encapsulating layer successively formed by a protective layer (7) made from polymer material, capped by a barrier layer (8), **characterized in that** said protective layer (7) comprises a copolymer formed from a homogeneous mixture (10) of at least two photopolymerizable precursor materials, respectively acrylate-based and epoxide-based.

2. The lithium microbattery according to claim 1, **characterized in that** the acrylate is an aliphatic diacrylate and/or the epoxide is an aromatic polyepoxide.

3. The lithium microbattery according to claim 2, **characterized in that** the diacrylate is the 1,6-hexanediol diacrylate (HDODA) and the aromatic polyepoxide is diglycidylether of bisphenol A (DGEBA).

4. The lithium microbattery according to claim 3, **characterized in that** the homogeneous mixture contains between 25 % and 75% by weight of 1,6-hexanediol diacrylate with respect to the total weight of the mixture.

5. The lithium microbattery according to any one of claims 1 to 4, **characterized in that** the mixture is liquid and has a dynamic viscosity comprised between 0.1 Pa.s and 0.4 Pa.s.

6. The lithium microbattery according to any one of claims 1 to 5, **characterized in that** the barrier layer (8) is a metal layer.

7. A fabrication method of a lithium microbattery according to any one of claims 1 to 6 **characterized in that** it comprises the following successive steps:
- fabricating a stack formed by a first and second current collector (2, 3), a positive electrode (4), a solid electrolyte (6), and a negative electrode (5), on a support,
- deposition of a thin layer of the homogeneous mixture (10) on the whole surface of the stack,
- photopolymerization of at least a part of the layer of homogeneous mixture (10) and,
- formation of the barrier layer (8).

8. The fabrication method according to claim 7, **characterized in that** photopolymerization is localized on a part of the layer of homogeneous mixture (10) covering the positive electrode (4), the electrolyte (6), the negative electrode (5) and only a part of the two collectors (2, 3), the method then comprising removal of the non-photopolymerized part of the layer of homogeneous mixture (10) before formation of the barrier layer (8).

9. The fabrication method according to claim 7, **characterized in that** photopolymerization is performed on the whole of the layer of homogeneous mixture (10) and is followed by selective dry etching, preferably with O₂ plasma, before formation of the barrier layer (8).

## Patentansprüche

1. Lithium-Mikrobatterie umfassend eine Verkapselungsschicht, die nacheinander von einer Schutzschicht (7) aus polymerem Material, auf der eine Barriereschicht (8) angeordnet ist, gebildet ist, **dadurch gekennzeichnet, dass** die Schutzschicht (7) ein Copolymer umfasst, das aus einem homogenen Gemisch (10) aus wenigstens zwei photopolymerisierbaren Vorläufermaterialien auf Acrylatbasis bzw. auf Epoxidbasis gebildet ist.

2. Lithium-Mikrobatterie nach Anspruch 1, **dadurch gekennzeichnet, dass** das Acrylat ein aliphatisches Diacrylat und/oder das Epoxid ein aromatisches Polyepoxid ist.

3. Lithium-Mikrobatterie nach Anspruch 2, **dadurch gekennzeichnet, dass** das Diacrylat 1,6-Hexandioldiacrylat (HDODA) und das aromatische Polyepoxid Bisphenol A-Diglycidylether (DGEBA) ist.

4. Lithium-Mikrobatterie nach Anspruch 3, **dadurch gekennzeichnet, dass** das homogene Gemisch zwischen 25 und 75 Gew.-% 1,6-Hexandioldiacrylat bezogen auf das Gesamtgewicht des Gemischs enthält.

5. Lithium-Mikrobatterie nach einem der Ansprüche 1 bis 4, **dadurch gekennzeichnet, dass** das Gemisch flüssig ist und eine dynamische Viskosität im Bereich zwischen 0,1 Pa.s und 0,4 Pa.s aufweist.

6. Lithium-Mikrobatterie nach einem der Ansprüche 1 bis 5, **dadurch gekennzeichnet, dass** die Barriereschicht (8) eine metallische Schicht ist.

7. Verfahren zur Herstellung einer Lithium-Mikrobatterie nach einem der Ansprüche 1 bis 6, **dadurch gekennzeichnet, dass** es die folgenden aufeinanderfolgenden Schritte umfasst:
- Ausbilden einer Aufschichtung auf einem Träger, die aus einem ersten und einem zweiten Stromkollektor (2, 3), einer positiven Elektrode (4), einem festen Elektrolyt (6) und einer negativen Elektrode (5) besteht,
- Abscheiden einer dünnen Schicht des homogenen Gemischs (10) auf der gesamten Oberfläche der Aufschichtung,
- Photopolymerisieren wenigstens eines Teils der Schicht aus dem homogenen Gemisch (10) und
- Bildung der Barriereschicht (8).

8. Herstellungsverfahren nach Anspruch 7, **dadurch gekennzeichnet, dass** die Photopolymerisation auf einen Teil der Schicht aus homogenem Gemisch (10), der die positive Elektrode (4), den Elektrolyt (6), die negative Elektrode (5) und lediglich einen Teil der beiden Kollektoren (2, 3) bedeckt, örtlich begrenzt ist, wobei das Verfahren anschließend das Entfernen des nicht photopolymerisierten Teils der Schicht aus homogenem Gemisch (10) vor Bildung der Barriereschicht (8) umfasst.

9. Herstellungsverfahren nach Anspruch 7, **dadurch gekennzeichnet, dass** die Photopolymerisation auf der gesamten Schicht aus homogenem Gemisch (10) vollzogen wird und sich hieran ein selektives Trockenätzen, vorzugsweise O₂-Plasma-Ätzen, vor Bildung der Barriereschicht (8) anschließt.
